# EUROPÄISCHE PATENTSCHRIFT

(11) **EP 2 684 312 B1**
(45) Veröffentlichungstag und Bekanntmachung des Hinweises auf die Patenterteilung: **25.11.2015**
(21) Anmeldenummer: 12711561.6
(22) Anmeldetag: 09.03.2012
(51) Int. Cl.: H04L 9/08, H04L 9/32, H04L 29/06

(54) **VERFAHREN ZUR AUTHENTISIERUNG, RF-CHIP-DOKUMENT, RF-CHIP-LESEGERÄT UND COMPUTERPROGRAMMPRODUKTE**
METHOD FOR AUTHENTICATION, RF CHIP DOCUMENT, RF CHIP READER AND COMPUTER PROGRAM PRODUCTS
PROCÉDÉ D'AUTHENTIFICATION, DOCUMENT À PUCE RFID, LECTEUR DE PUCES RFID ET PRODUITS PROGRAMMES D'ORDINATEUR

(30) Priorität: 10.03.2011 DE 102011013562
(43) Veröffentlichungstag der Anmeldung: 15.01.2014
(73) Patentinhaber: Bundesrepublik Deutschland, vertreten durch das Bundesministerium des Innern, vertreten durch das Bundesamt für Sicherheit, 53175 Bonn (DE)
(72) Erfinder: KÜGLER, Dennis, 53121 Bonn (DE); BENDER, Jens, 53173 Bonn (DE)
(74) Vertreter: Schohe, Stefan
(86) Internationale Anmeldenummer: PCT/EP2012/001076
(87) Internationale Veröffentlichungsnummer: WO 2012/119790

(56) Entgegenhaltungen:
- US-A1- 2007 186 099
- Anonymous: "BSI TR-03110 Advanced Security Mechanisms for Machine Readable Travel Documents, Parts 1, 2 and 3", , 14. Oktober 2010 (2010-10-14), XP55029789, Bundesamt für Sicherheit in der Informationstechnik Gefunden im Internet: URL:https://www.bsi.bund.de/ContentBSI/Pub likationen/TechnischeRichtlinien/tr03110/i ndex_htm.html [gefunden am 2012-06-13] in der Anmeldung erwähnt
- JEAN-SEBASTIEN CORON ET AL: "Supplemental Access Control (PACE v2): Security Analysis of PACE Integrated Mapping", INTERNATIONAL ASSOCIATION FOR CRYPTOLOGIC RESEARCH,, vol. 20110607:150018, 1 February 2011 (2011-02-01), pages 1-18, XP061004676, [retrieved on 2011-02-01]
- Ã ZGÃ 1/4 R DAGDELEN ET AL: "Security Analysis of the Extended Access Control Protocol for Machine Readable Travel Documents", 25 October 2010 (2010-10-25), INFORMATION SECURITY, SPRINGER BERLIN HEIDELBERG, BERLIN, HEIDELBERG, PAGE(S) 54 - 68, XP019159816, ISBN: 978-3-642-18177-1

## Beschreibung

Für eine vertrauenswürdige Kommunikation zwischen einer ersten Partei und einer zweiten Partei ist eine gegenseitige Authentisierung erforderlich. Die Erfindung betrifft ein Verfahren zur Authentisierung, ein RF-Chip-Dokument, ein RF-Chip-Lesegerät und Computerprogrammprodukte.

Grundsätzlich sind zwei Authentisierungsverfahren bekannt. Zum einen eine passwortbasierte Authentisierung und zum anderen eine zertifikatbasierte Authentisierung.

Zur passwortbasierten Authentisierung zählt das Password Authenticated Connection Establishment (PACE), ausführlich beschrieben in der Technischen Richtlinie TR-03110 Version 2.05 des Bundesamtes für Sicherheit in der Informationstechnik (BSI)"Advanced Security Mechanisms for Machine Readable Travel Documents". Hierbei handelt es sich um eine passwortbasierte Schlüsseleinigung. Die passwortbasierte Schüsseleinigung umfasst die Schritte: Eine erste Partei und zweite Partei
- erzeugen jeweils ein ephemerales Schlüsselpaar, bestehend aus einem privaten ephemeralen Schlüssel und einem öffentlichen ephemeralen Schlüssel,
- tauschen jeweils den öffentlichen ephemeralen Schlüssel aus und validieren diese über ein gemeinsames Passwort,
- erzeugen und validieren anschließend einen Sitzungsschlüssel, auf dessen Basis ein sicherer Kommunikationskanal etabliert wird.

Einzelne Verfahrensschritte des PACE-Protokolls sind in J.-S. Coron et al: "Supplemental Access Control (PACE v2): Security Analysis of PACE Integrated Mapping", International Association for Cryptologic Research, 2011, beschrieben.

Für die zertifikatsbasierte Authentisierung besitzt eine erste Partei ein statisches Schlüsselpaar, bestehend aus einem privaten statischen Schlüssel und einem öffentlichen statischen Schlüssel, und ein von einer Zertifizierungsstelle ausgestelltes Zertifikat über den öffentlichen statischen Schlüssel. Der Zertifizierungsstelle ist ein öffentlicher Schlüssel zugeordnet, den die zweite Partei kennt. Die zertifikatsbasierte Authentisierung basiert darauf, dass die Zugehörigkeit des statischen Schlüsselpaares zur ersten Partei durch eine vertrauenswürdige dritte Partei, die Zertifizierungsstelle, in Form eines Zertifikates bestätigt wird. Das Zertifikat enthält dazu mindestens den öffentlichen statischen Schlüssel, die eindeutige Identität der ersten Partei und eine elektronische Signatur der Zertifizierungsstelle über diese Daten. Die Signatur ist mir dem öffentlichen Schlüssel der Zertifizierungstelle verifizierbar. In einer nachfolgenden Authentisierung kann die zweite Partei prüfen, ob die erste Partei den zum im Zertifikat enthaltenen öffentlichen statischen Schlüssel zugehörigen privaten Schlüssel besitzt. Bekannte Verfahren für die zertifikatsbasierte Authentisierung sind die "Chip Authentisierung", ausführlich beschrieben in der Technischen Richtlinie TR-03110 Version 2.05 des Bundesamtes für Sicherheit in der Informationstechnik (BSI) "Advanced Security Mechanisms for Machine Readable Travel Documents".

Aus der vorgenannten Richtlinie TR-03110 ist auch ein Verfahren bekannt, dass eine Kombination aus passwortbasierter Authentisierung und zertifikatsbasierter Authentisierung darstellt. Diese Kombination ist unter anderem dann erforderlich, wenn die Identität mindestens einer Partei vertraulich ist. Die Berechtigung zur Kommunikation wird erst durch Kenntnis und Nachweis eines gemeinsamen Passwortes erteilt. Dieses gemeinsame Passwort wird üblicherweise über einen speziellen Kanal, oft von geringer Bandbreite, zwischen den Kommunikationspartnern verteilt. Der ersten Partei kann ein RF-Chip-Dokument mit einem RF-Chip zugeordnet sein, auf dem vertrauliche Daten gespeichert sind. Der zweiten Partei kann ein Lesegerät für das RF-Chip-Dokument zugeordnet sein. Das gemeinsame Passwort kann auf dem RF-Chip-Dokument aufgedruckt sein und über einen optischen Scanner an das RF-Chip-Lesegerät übermittelt werden.

Nach der passwortbasierten Authentisierung wissen beide Parteien jeweils, dass sie auf sichere Weise mit einer anderen Partei kommunizieren, die im Besitz des gleichen Passworts ist, jedoch nicht, wer die andere Partei tatsächlich ist. Dieses ist insbesondere dann problematisch, wenn Gruppenpasswörter verwendet werden, so dass die Passwörter nicht eindeutig für jeweils eine Kombination aus zwei Parteien vergeben werden.

Durch eine nachgelagerte, zertifikatsbasierte Authentisierung kann dann die eindeutige Identität einer Partei festgestellt werden. Die Durchführung der zertifikatsbasierten Authentisierung nach der passwortbasierten Authentisierung hat den Vorteil, dass die Identität der sich authentisierenden Partei erst dann offengelegt wird, wenn festgestellt wurde, dass beide Parteien grundsätzlich zur Kommunikation miteinander berechtigt sind, da beide das gleiche Passwort tisierenden Partei erst dann offengelegt wird, wenn festgestellt wurde, dass beide Parteien grundsätzlich zur Kommunikation miteinander berechtigt sind, da beide das gleiche Passwortverwenden. Aufgrund der Verschlüsselung und Integritätssicherung des Kanals durch die passwortbasierte Schlüsseleinigung können auch Dritte ein ausgetauschtes Zertifikat nicht einsehen. Ferner stellt die passwortbasierte Schlüsseleinigung auch sicher, dass das verwendete Passwort gegen Einsicht von Dritten geschützt ist.

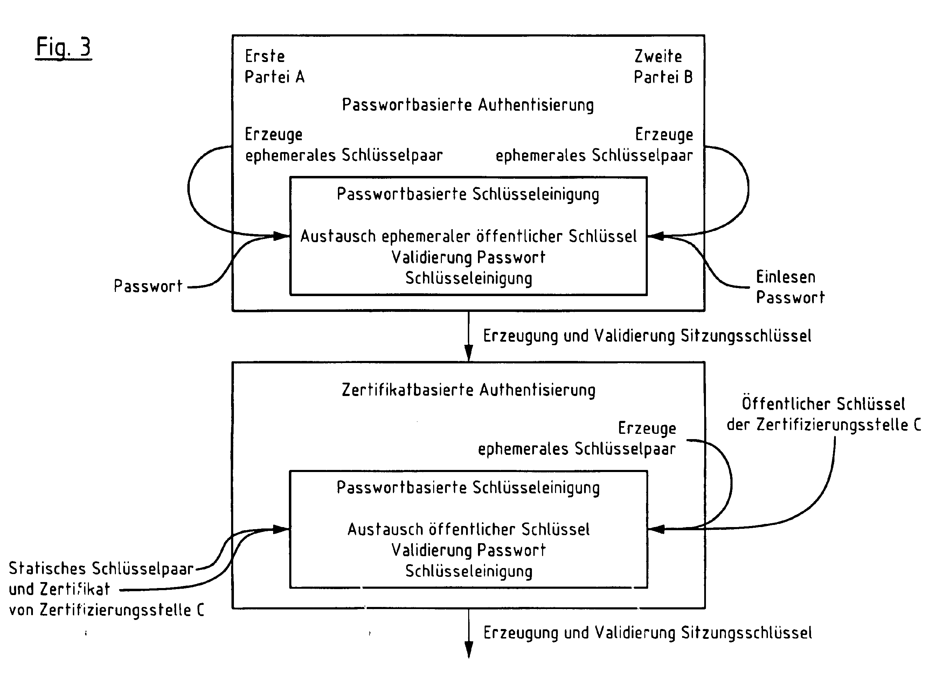

Die bisherige Implementierung führt die beiden Authentisierungsverfahren vollständig nacheinander aus. Illustriert ist dies in Fig. 3. Sowohl in der passwortbasierten Schlüsseleinigung als auch in der zertifikatsbasierten Authentisierung werden ephemerale Schlüsselpaare erzeugt und verwendet. Die Erzeugung der Schlüsselpaare und die Anwendung insbesondere der öffentlichen Schlüssel der ephemeralen Schlüsselpaare ist rechenintensiv und der notwendige Austausch der öffentlichen Schlüssel der ephemeralen Schlüsselpaare erfordert eine zusätzliche Kommunikation zwischen den Parteien.

Ein weiteres Problem der sequentiellen Ausführung ist die fehlende Bindung beider Protokolle, so dass nicht sichergestellt ist, dass beide Protokolle jeweils von der gleichen Partei durchgeführt wurden.

Ö. Dagdelen und M. Fischlin gehen in "Security Analysis oft he Extended Access Cotnrol Protocol for Machine Readable Travel Documents", ISC 2010, auf das Extended Access Control (EAC)-Protokoll ein, welches zur gegenseitigen Authentisierung zwischen einem Terminal und einem Chip und dem Aufbau einer authentisierten und verschlüsselten Verbindung ein Terminalauthentisierungsprotokoll und ein Chip-Authentisierungsprotokoll verwenden. Die Authentisierung des Terminals beruht auf einem Zertifikat und einem ephemeralen Schlüsselpaar des Terminals.

Der Erfindung liegt die Aufgabe zu Grunde, ein Verfahren zur Authentisierung zur vertrauenswürdigen Kommunikation effizient und sicher auszubilden.

Diese Aufgabe wird erfindungsgemäß durch die Merkmale des Verfahrensanspruches 1 gelöst. Die Aufgabe wird ferner durch jeden der nebengeordneten Ansprüche 4, 5, 6 und 7 gelöst, die auf die eigenständigen Herstellungsprodukte RF-Chip-Dokument, Computerprogrammprodukt für das RF-Chip-Dokument, RF-Chip-Lesegerät und Computerprogrammprodukt für das RF-Chip-Lesegerät gerichtet sind.

Gemäß Merkmal d des Anspruches 1 berechnet eine Partei A eine Transformation zwischen dem eigenen ephemeralen Schlüsselpaar aus der passwortbasierten Authentisierung und dem eigenen statischen Schlüsselpaar der zertifikatsbasierten Authentisierung unter Erhalt von einem Parameter der Transformation. Durch die Wiederverwendung des eigenen ephemeralen Schlüsselpaares aus der passwortbasierten Authentisierung in der zertifikatsbasierten Authentisierung wird zum einen der gesamte Berechnungs- und Kommunikationsaufwand verringert, zum anderen erfolgt eine Bindung der beiden Protokolle, so dass sichergestellt ist, dass beide Protokolle von der gleichen Partei ausgeführt werden. Dadurch wird die Sicherheit bei gleichzeitiger Verringerung des Aufwandes erhöht.

Die mit der Erfindung erzielten Vorteile bestehen darin, dass die zur Durchführung beider Protokolle benötigte Zeit erheblich reduziert ist. Die Berechnung und die Anwendung der Transformation ist wesentlich effizienter, als die erneute Erstellung eines weiteren ephemeralen Schlüsselpaares und der anschließenden Durchführung der Authentisierung. Mit großem Vorteil wird die Durchführung der zweiten Schlüsseleinigung vollständig eingespart und die Sitzungsschlüssel der passwortbasierten Authentisierung weiterverwendet. Die Bindung der beiden Protokolle erfolgt dadurch, dass zur Berechnung der Transformation die Kenntnis sowohl des ephemeralen privaten Schlüssels der passwortbasierten Schlüsseleinigung als auch des statischen privaten Schlüssels der zertifikatbasierten Authentisierung notwendig ist.

Ein erstes, eigenständiges Herstellungsprodukt ist ein RF-Chip-Dokument mit einem Mikrocomputer mit einem Mikrocomputerspeicher, derart, dass im Mikrocomputerspeicher ein erstes Computerprogramm abgespeichert ist, das so ausgebildet ist, dass das Verfahren bezüglich der Partei A ausführbar ist.

Ein erstes Computerprogrammprodukt, das ein computerlesbares Medium aufweist, umfasst einen Programmcode zur Implementierung des ersten Computerprogramms in den Mikrocomputerspeicher. Hierzu dient eine Rechenanlage, die im Rahmen der Herstellung des RF-Chip-Dokuments verwendet wird.

Ein zweites, eigenständiges Herstellungsprodukt ist ein RF-Chip-Lesegerät mit einem Rechner mit einem Rechnerspeicher, derart, dass im Rechnerspeicher ein zweites Computerprogramm abgespeichert ist, das so ausgebildet ist, dass das Verfahren bezüglich der Partei B ausführbar ist.

Ein zweites Computerprogrammprodukt, das ein computerlesbares Medium aufweist, umfasst einen Programmcode zur Implementierung des zweiten Computerprogramms in den Rechnerspeicher des Rechners des RF-Chip-Lesegeräts.

Gemäß einer vorteilhaften Ausgestaltung der Erfindung wird im Schritt d) des Anspruches 1 für die Berechnung des Parameters der Transformation der private statische Schlüssel auf den privaten ephemeralen Schlüssel abgebildet. Dies vereinfacht die Berechnung, da alle vom statischen Schlüssel direkt abhängigen Berechnungen einmalig vorberechnet werden können.

Gemäß einer weiteren vorteilhaften Ausgestaltung der Erfindung wird im Schritt d) des Anspruches 1 für die Berechnung des Parameters der Transformation eine zusätzliche Zufallszahl verwendet, die von der ersten Partei nicht beeinflussbar ist. Die zusätzliche Zufallszahl kann eine Zahl sein, die von der zweiten Partei an die erste Partei übermittelt wird. Diese Ausgestaltung hat den Vorteil, dass die Berechnung des Parameters der Transformation nicht ausschließlich auf den ephemeralen und statischen Schlüsselpaaren der ersten Partei basiert, sondern auch von einem Wert abhängt, der nicht unter der Kontrolle der ersten Partei steht. Somit wird die Sicherheit des Verfahrens erhöht.

Gemäß einer weiteren vorteilhaften Ausgestaltung der Erfindung hinsichtlich Schritt f) des Anspruches 1 wendet die zweite Partei den erhaltenen Parameter der Transformation nur auf einen der beiden öffentlichen Schlüssel der ersten Partei an und überprüft die Korrektheit des erhaltenen transformierten öffentlichen Schlüssels dadurch, dass eine Äquivalenz des transformierten öffentlichen Schlüssels mit dem anderen öffentlichen Schlüssel der Partei überprüft wird. Dadurch, dass die Transformation nur auf einen der beiden öffentlichen Schlüssel der ersten Partei angewendet wird, ist der Berechnungsaufwand gering. Höher wäre der Berechnungsaufwand, würde man den Parameter der Transformation auf beide öffentlichen Schlüssel der ersten Partei anwenden. Dann würden zwei transformierte öffentliche Schlüssel erhalten werden. Eine jeweilige Korrektheit der beiden transformierten öffentlichen Schlüssel könnte dadurch überprüft werden, indem man eine Äquivalenz der beiden transformierten öffentlichen Schlüssel untereinander überprüft.

Ausführungsbeispiele der Erfindung werden nachfolgend an Hand der Zeichnungen näher erläutert. Dabei zeigen:
Fig. 1 ein Zusammenwirken einer ersten Partei, einer zweiten Partei und einer Zertifizierungsstelle, als Skizze;
Fig. 2 einen Ablauf einer Authentisierung, als Ablaufskizze;
Fig. 3 einen Ablauf einer Authentisierung nach dem Stand der Technik, als Ablaufskizze.

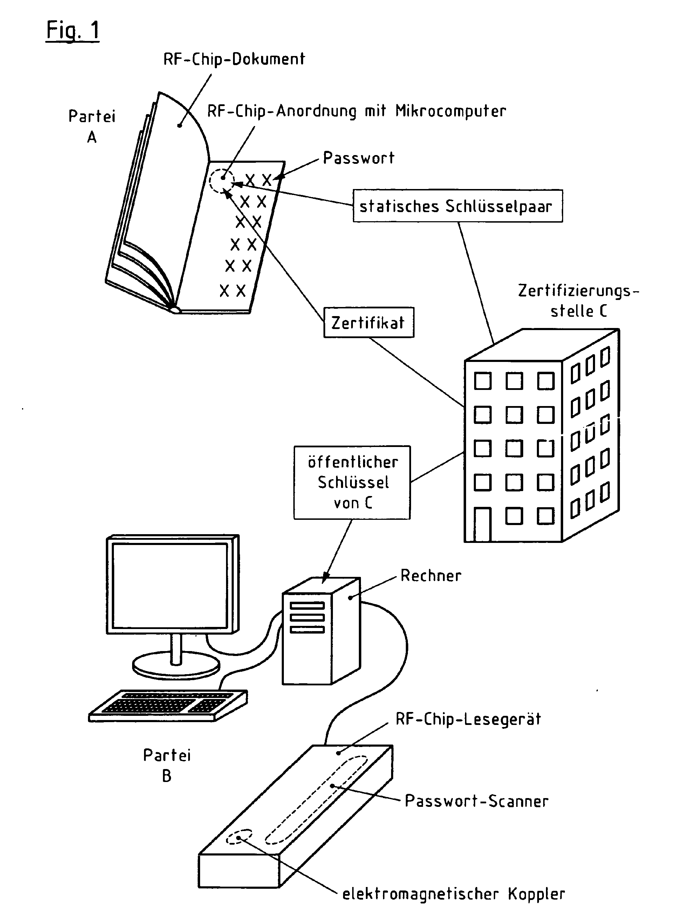

Die Fig. 1 illustriert ein System zur Authentisierung zur vertrauenswürdigen Kommunikation zwischen einer ersten Partei A und einer zweiten Partei B. Das System umfasst ein RF-Chip-Dokument und ein RF-Chip-Lesegerät. Das RF-Chip-Dokument ist der ersten Partei A und das RF-Chip-Lesegerät der zweiten Partei B zugeordnet. Das RF-Chip-Dokument umfasst einen Mikrocomputer mit einem Mikrocomputerspeicher. Im Mikrocomputerspeicher ist ein erstes Computerprogramm abgespeichert, das so ausgebildet ist, dass ein Verfahren zur Authentisierung bezüglich der Partei A ausführbar ist. Die Implementierung des ersten Computerprogramms in den Mikrocomputerspeicher erfolgte unter Verwendung eines ersten Computerprogrammproduktes.

Das RF-Chip-Lesegerät umfasst einen Rechner mit einem Rechnerspeicher. Im Rechnerspeicher ist ein zweites Computerprogramm abgespeichert, das so ausgebildet ist, dass das Verfahren bezüglich der Partei B ausführbar ist. Die Implementierung des zweiten Computerprogramms in den Rechnerspeicher erfolgte unter Verwendung eines zweiten Computerprogrammproduktes.

Hinsichtlich der Partei A ist das RF-Chip-Dokument ein Reisepass. Hinsichtlich der Partei B ist das RF-Chip-Lesegerät ein Gerät für Grenzbeamte. Hersteller und gleichzeitig Herausgeber des Reisepasses ist eine Zertifizierungsstelle C.

Das Verfahren zur Authentisierung ist eine Kombination von einer passwortbasierten Authentisierung und einer zertifikatsbasierten Authentisierung. Für die zertifikatsbasierte Authentisierung besitzt die erste Partei A ein statisches Schlüsselpaar und ein von der Zertifizierungsstelle C ausgestelltes Zertifikat.

Die zweite Partei B kennt den öffentlichen Schlüssel der Zertifizierungsstelle C. Bezogen auf das vorliegende Ausführungsbeispiel ist der öffentliche Schlüssel der Zertifizierungsstelle C in dem Rechnerspeicher des Rechners des RF-Chip-Lesegeräts gespeichert.

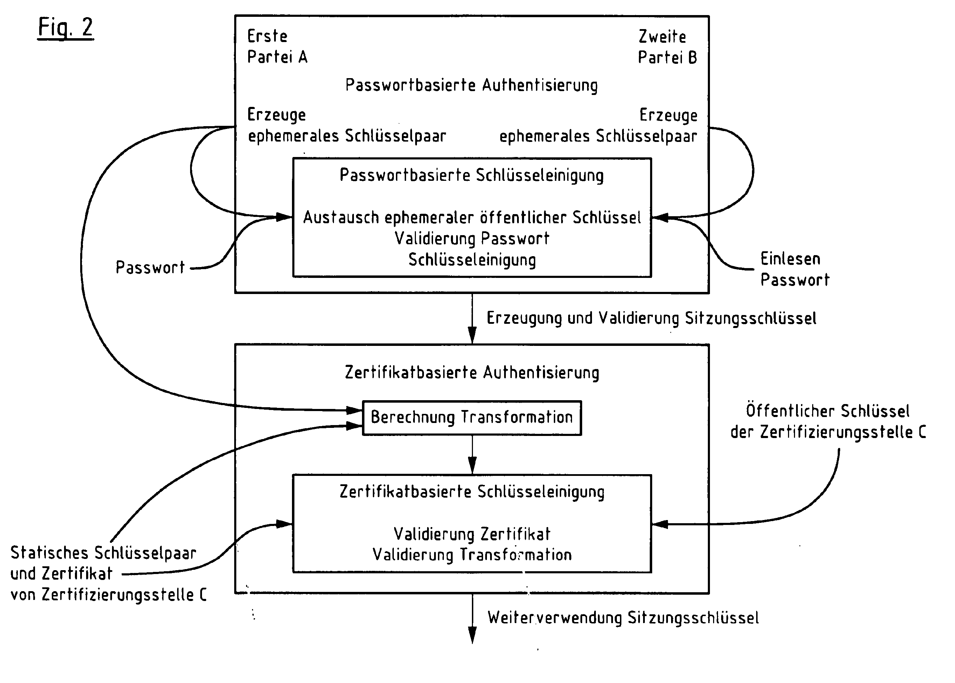

Wie Fig. 2 zeigt, wird zuerst wird eine passwortbasierte Authentisierung durchgeführt. Die passwortbasierte Authentisierung erfolgt über das PACE-Protokoll, definiert in der Technischen Richtlinie TR-03110 Version 2.05 des Bundesamtes für Sicherheit in der Informationstechnik (BSI) "Advanced Security Mechanisms for Machine Readable Travel Documents".

Allgemein gilt, dass Schlüsselpaare basierend auf diskreten Logarithmen verwendet werden. Der private Schlüssel x ist jeweils eine Zufallszahl im Bereich von 1 bis q-1, wobei q die Ordnung des Erzeugers g der verwendeten mathematischen Gruppe ist (z.B. die multiplikative Gruppe eines endlichen Körpers oder die additive Gruppe der Punkte einer elliptischen Kurve). Der zugehörige öffentliche Schlüssel y berechnet sich mit: y=g^x. Die Potenzierung (^) stellt das x-malige Anwenden der Gruppenoperation (*) beginnend mit dem Erzeuger g dar.

Die Schritte der passwortbasierten Authentisierung sind:
a) Die erste Partei A und zweite Partei B erzeugen jeweils ein ephemerales Schlüsselpaar, bestehend aus einem privaten ephemeralen Schlüssel und einem öffentlichen ephemeralen Schlüssel. Als Kurzbezeichnung für den privaten ephemeralen Schlüssel der Partei A dient nachfolgend xe_{A}. Der öffentliche ephemerale Schlüssel der Partei A wird nachfolgend mit ye_{A} bezeichnet. xe_{B} und ye_{B} stehen für den privaten und öffentlichen ephemeralen Schlüssel der Partei B. Die ephemeralen Schlüsselpaare xe_{A} mit ye_{A} und xe_{B} mit ye_{B} sind für eine Diffie-Hellman-Schlüsseleinigung geeignet.
b) Die erste Partei A und zweite Partei B tauschen jeweils den öffentlichen ephemeralen Schlüssel aus und validieren diese über ein gemeinsames Passwort. Das Validieren erfolgt mittels der Durchführung des PACE-Protokolls. Mit Blick auf die Fig. 1 ist das gemeinsame Passwort hinsichtlich der Partei A in der RF-Chip-Anordnung des RF-Chip-Dokuments abgespeichert. Ferner ist das gemeinsame Passwort auf dem RF-Chip-Dokument aufgedruckt. Über einen Passwort-Scanner des RF-Chip-Lesegeräts ist der Partei B das gemeinsame Passwort bekannt.
c) Die erste Partei A und zweite Partei B erzeugen und validieren einen Sitzungsschlüssel, auf dessen Basis ein sicherer Kommunikationskanal etabliert wird. Dies erfolgt auf der Basis eines im PACE-Protokolls etablierten, gemeinsamen Geheimnisses.

Anschließend wird eine zertifikatsbasierte Authentisierung durchgeführt.

Hierzu werden ein erstes und ein zweites Ausführungsbeispiel beschrieben.

Die Schritte des ersten Ausführungsbeispieles der zertifikatsbasierten Authentisierung sind:
d) Die erste Partei A berechnet eine Transformation zwischen dem eigenen ephemeralen Schlüsselpaar aus der passwortbasierten Authentisierung und dem eigenen statischen Schlüsselpaar der zertifikatsbasierten Authentisierung unter Erhalt von einem Parameter der Transformation.
   Für die Berechnung des Parameters der Transformation wird der private statische Schlüssel xs_{A} auf den privaten ephemeralen Schlüssel xe_{A} abgebildet. Es handelt sich um eine bijektive Abbildung. Die Transformation t wird berechnet mit der Formel: t = xe_{A} * xs_{A}^(-1). Im vorliegenden ersten Ausführungsbeispiel ist der Parameter der Transformation der berechnete Wert t. Das Inverse des statischen privaten Schlüssels xs_{A}^(-1) wird nur einmalig und nicht bei jeder Authentisierung erneut berechnet. Die Transformation ist eine bijektive Transformation.
e) Die erste Partei A sendet den Parameter der Transformation, hier gegeben durch den in Schritt d bestimmten Wert t, gemeinsam mit dem von der Zertifizierungsstelle C ausgestellten Zertifikat an die zweite Partei B über den sicheren Kommunikationskanal.
f) Die zweite Partei B wendet den erhaltenen Parameter der Transformation auf den im Zertifikat enthaltenen öffentlichen statischen Schlüssel ys_{A} der ersten Partei A an und erhält damit einen transformierten öffentliche Schlüssel yt_{A}. Die Formel hierzu lautet: yt_{A} = ys_{A}^t. Die Korrektheit des transformierten öffentlichen Schlüssels yt_{A} ist nun zu überprüfen. Hierzu überprüft die zweite Partei eine Äquivalenz des öffentlichen transformierten Schlüssels yt_{A} der Partei A mit dem zuvor in der passwortbasierten Authentisierung ausgetauschten öffentlichen ephemeralen Schlüssel ye_{A} der ersten Partei A. Die zweite Partei prüft: ye_{A} = yt_{A}.

In Abweichung zum vorliegenden Ausführungsbeispiel könnte die zweite Partei B den erhaltenen Parameter der Transformation auch auf den öffentlichen ephemeralen Schlüssel ye_{A} der ersten Partei A anwenden und die Korrektheit des erhaltenen transformierten öffentlichen Schlüssels dadurch überprüfen, dass eine Äquivalenz des transformierten Schlüssels mit dem öffentlichen statischen Schlüssel ys_{A} der Partei A überprüft wird.
g) Die zweite Partei B validiert das von der ersten Partei A erhaltene Zertifikat mit dem öffentlichen Schlüssel der Zertifizierungsstelle C.

Die Schritte des zweiten Ausführungsbeispieles der zertifikatsbasierenden Authentisierung sind:
d) Die erste Partei A berechnet eine Transformation zwischen dem eigenen ephemeralen Schlüsselpaar aus der passwortbasierten Authentisierung und dem eigenen statischen Schlüsselpaar der zertifikatsbasierten Authentisierung unter Erhalt von einem Parameter der Transformation.
   Im Unterschied zum ersten Ausführungsbeispiel wird für die Berechnung der Transfomation zusätzlich eine Zufallszahl c verwendet, die nicht von der Partei A beeinflusst werden kann. Zum Beispiel kann die zweite Partei B zuvor der Partei A eine Zufallszahl c übermitteln oder die Zufallszahl c könnte deterministisch aus dem Protokollablauf berechnet werden, zum Beispiel durch die Anwendung einer Hashfunktion auf den epehmeralen öffentlichen Schlüssel der Partei B.
   Die erste Partei A berechnet die Transformation t mit: t = xe_{A} - c * xs_{A}.
   Der Parameter der Transformation ist im vorliegenden zweiten Ausführungsbeispiel ein Tupel mit dem Wert der Zufallszahl c und dem Wert der Transformation. Abgekürzt ist der Tupel mit: (c, t).
e) Die erste Partei A sendet den Parameter der Transformation (c, t) gemeinsam mit dem von der Zertifizierungsstelle C ausgestellten Zertifikat an die zweite Partei B über den sicheren Kommunikationskanal. Da die Zufallszahl c der Partei B bekannt ist, genügt es, wenn die erste Partei nur den Wert der Transformation t der Partei B übermittelt.
f) Die zweite Partei B wendet den erhaltenen Parameter (c, t) der Transformation auf den im Zertifikat enthaltenen statischen öffentlichen Schlüssel ys_{A} der ersten Partei A an und erhält damit einen transformierten öffentlichen Schlüssel yt_{A}. Die Formel hierzu lautet: yt_{A} = g^t * ys_{A}^c. Die Korrektheit des transformierten öffentlichen Schlüssels yt_{A} ist nun zu überprüfen. Hierzu überprüft die zweite Partei eine Äquivalenz des öffentlichen transformierten Schlüssels yt_{A} der Partei A mit dem zuvor in der passwortbasierten Authentisierung ausgetauschten öffentlichen ephemeralen Schlüssel ye_{A} der ersten Partei A. Die zweite Partei prüft: ye_{A} = yt_{A}.
g) Die zweite Partei B validiert das von der ersten Partei A erhaltene Zertifikat mit dem öffentlichen Schlüssel der Zertifizierungsstelle C.

## Patentansprüche

1. Verfahren zur Authentisierung zur vertrauenswürdigen Kommunikation zwischen einer ersten Partei (A) und einer zweiten Partei (B) durch eine Kombination von einer passwortbasierten Authentisierung und einer zertifikatsbasierten Authentisierung, derart, dass für die zertifikatsbasierte Authentisierung die erste Partei (A) ein statisches Schlüsselpaar, bestehend aus einem privaten statischen Schlüssel und einem öffentlichen statischen Schlüssel, und ein von einer Zertifizierungsstelle (C) ausgestelltes Zertifikat über den öffentlichen statischen Schlüssel besitzt, und der Zertifizierungsstelle (C) ein öffentlicher Schlüssel zugeordnet ist, den die zweite Partei (B) kennt, derart,
• dass zuerst eine passwortbasierte Authentisierung mit folgenden Schritten durchgeführt wird: Die erste Partei (A) und zweite Partei (B)
a) erzeugen jeweils ein ephemerales Schlüsselpaar, bestehend aus einem privaten ephemeralen Schlüssel und einem öffentlichen ephemeralen Schlüssel,
b) tauschen jeweils den öffentlichen ephemeralen Schlüssel aus und validieren diese über ein gemeinsames Passwort,
c) erzeugen und validieren anschließend einen Sitzungsschlüssel, auf dessen Basis ein sicherer Kommunikationskanal etabliert wird,
• dass anschließend eine zertifikatsbasierte Authentisierung mit folgenden Schritten durchgeführt wird:
d) Die erste Partei (A) berechnet eine Transformation zwischen dem eigenen ephemeralen Schlüsselpaar aus der passwortbasierten Authentisierung und dem eigenen statischen Schlüsselpaar der zertifikatsbasierten Authentisierung unter Erhalt von einem Parameter der Transformation,
e) die erste Partei (A) sendet den Parameter der Transformation gemeinsam mit dem von der Zertifizierungsstelle (C) ausgestellten Zertifikat an die zweite Partei (B) über den sicheren Kommunikationskanal,
f) die zweite Partei (B) wendet den erhaltenen Parameter der Transformation auf den öffentlichen ephemeralen Schlüssel und/oder den öffentlichen statischen Schlüssel der ersten Partei (A) an und erhält dabei mindestens einen transformierten öffentlichen Schlüssel, dessen Korrektheit überprüft wird,
g) die zweite Partei (B) validiert das von der ersten Partei (A) erhaltene Zertifikat mit dem öffentlichen Schlüssel der Zertifizierungsstelle (C), und
• dass im Schritt d) für die Berechnung des Parameters der Transformation der private statische Schlüssel auf den privaten ephemeralen Schlüssel abgebildet wird.

2. Verfahren nach Anspruch 1, derart, dass im Schritt d) des Anspruches 1 für die Berechnung des Parameters der Transformation eine zusätzliche Zufallszahl verwendet wird, die von der ersten Partei (A) nicht beeinflussbar ist.

3. Verfahren nach Anspruch 1 oder 2, bei dem hinsichtlich Schritt f) des Anspruches 1 die zweite Partei (B) den erhaltenen Parameter der Transformation nur auf einen der beiden öffentlichen Schlüssel der ersten Partei (A) anwendet und die Korrektheit des erhaltenen transformierten öffentlichen Schlüssel dadurch überprüft, dass eine Äquivalenz des transformierten Schlüssels mit dem anderen öffentlichen Schlüssel der ersten Partei (A) überprüft wird.

4. RF-Chip-Dokument mit einem Mikrocomputer mit einem Mikrocomputerspeicher, derart, dass im Mikrocomputerspeicher ein erstes Computerprogramm abgespeichert ist, das so ausgebildet ist, dass das Verfahren nach einem der Ansprüche 1 bis 3 bezüglich der ersten Partei (A) ausführbar ist.

5. Erstes Computerprogrammprodukt, das ein computerlesbares Medium aufweist, umfassend einen Programmcode zur Implementierung des ersten Computerprogramms nach Anspruch 4 in den Mikrocomputerspeicher.

6. RF-Chip-Lesegerät mit einem Rechner mit einem Rechnerspeicher, derart,
dass im Rechnerspeicher ein zweites Computerprogramm abgespeichert ist, das so ausgebildet ist, dass das Verfahren nach einem der Ansprüche 1 bis 3 bezüglich der zweiten Partei (B) ausführbar ist.

7. Zweites Computerprogrammprodukt, das ein computerlesbares Medium aufweist, umfassend einen Programmcode zur Implementierung des zweiten Computerprogramms nach Anspruch 6 in den Rechnerspeicher.

## Claims

1. An authentication method for trusted communication between a first party (A) and a second party (B) by combining password-based authentication and certificate-based authentication in such a manner that, for the certificate-based authentication, the first party (A) has a static key pair consisting of a private static key and a public static key and a certificate for the public static key issued by a certification authority (C), and the certification authority (C) is assigned a public key which is known by the second party (B) in such a manner
• that password-based authentication is first of all carried out with the following steps: the first party (A) and the second party (B)
a) each generate an ephemeral key pair consisting of a private ephemeral key and a public ephemeral key,
b) each interchange the public ephemeral key and validate the latter using a common password,
c) generate and then validate a session key, on the basis of which a secure communication channel is established,
• that certificate-based authentication is then carried out with the following steps:
d) the first party (A) calculates a transformation between its own ephemeral key pair from the password-based authentication and its own static key pair from the certificate-based authentication so as to obtain a parameter of the transformation,
e) the first party (A) transmits the parameter of the transformation, together with the certificate issued by the certification authority (C), to the second party (B) via the secure communication channel,
f) the second party (B) applies the received parameter of the transformation to the public ephemeral key and/or the public static key of the first party (A) and in the process obtains at least one transformed public key, the correctness of which is checked, and
g) the second party (B) validates the certificate received from the first party (A) using the public key of the certification authority (C), and
• that, in step d), the private static key is mapped to the private ephemeral key in order to calculate the parameter of the transformation.

2. The method as claimed in claim 1 in such a manner that, in step d) of claim 1, an additional random number which cannot be influenced by the first party (A) is used in order to calculate the parameter of the transformation.

3. The method as claimed in claim 1 or 2, in which, with respect to step f) of claim 1, the second party (B) applies the received parameter of the transformation only to one of the two public keys of the first party (A) and checks the correctness of the obtained transformed public key by checking for equivalence between the transformed key and the other public key of the first party (A).

4. An RF chip document having a microcomputer with a microcomputer memory in such a manner that the microcomputer memory stores a first computer program which is designed in such a manner that the method as claimed in one of claims 1 to 3 can be carried out with respect to the party A.

5. A first computer program product which has a computer-readable medium, comprising a program code for implementing the first computer program as claimed in claim 4 in the microcomputer memory.

6. An RF chip reader having a computer with a computer memory in such a manner that the computer memory stores a second computer program which is designed in such a manner that the method as claimed in one of claims 1 to 3 can be carried out with respect to the party B.

7. A second computer program product which has a computer-readable medium, comprising a program code for implementing the second computer program as claimed in claim 6 in the computer memory.

## Revendications

1. Procédé d'authentification pour une communication fiable entre une première partie (A) et une deuxième partie (B) à l'aide d'une combinaison d'une authentification basée sur un mot de passe et d'une authentification basée sur un certificat, de façon à ce que, pour l'authentification basée sur un certificat, la première partie (A) possède une paire de clés statique constituée d'une clé statique privée et d'une clé statique publique, et un certificat délivré par un organisme de certification (C) concernant la clé statique publique et, l'organisme de certification (C) se voyant attribuer une clé publique que le la deuxième partie (B) connaît, de façon à ce que
- d'abord une authentification basée sur un mot de passe soit effectuée avec les étapes suivantes : la première partie (A) et la deuxième partie (B)
a) génèrent chacune une paire de clés éphémère constituée d'une clé éphémère privée respectivement et d'une clé éphémère publique,
b) échangent chacune la clé éphémère publique et la valident par l'intermédiaire d'un mot de passe commun,
c) génèrent et valident ensuite une clé de session sur la base de laquelle un canal de communication sécurisé est établi,
- puis, qu'une authentification basée sur un certificat soit effectuée avec les étapes suivantes :
d) la première étape (A) calcule une transformation entre sa propre paire de clés éphémère provenant de l'authentification basée sur un mot de passe et sa propre paire de clés statique provenant de l'authentification basée sur un certificat, de façon à obtenir un paramètre de la transformation,
e) la première partie (A) envoie le paramètre de la transformation conjointement avec le certificat délivré par l'organisme de certification (C) à la deuxième partie (B) par l'intermédiaire du canal de communication sécurisé,
f) la deuxième partie (B) applique le paramètre de transformation reçu à la clé éphémère publique et/ou la clé statique publique de la première partie (A) et obtient au moins une clé publique transformée dont l'exactitude est vérifiée,
g) la deuxième partie (B) valide le certificat obtenu de la première partie (A) avec la clé publique de l'organisme de certification (C) et
- de façon à ce que, dans l'étape d), pour le calcul du paramètre de la transformation, la clé statique privée est formée sur la base de la clé éphémère privée.

2. Procédé selon la revendication 1, de façon à ce que, dans l'étape d) de la revendication 1, pour le calcul du paramètre de la transformation, un nombre aléatoire supplémentaire est utilisé, qui ne peut pas être influencé par la première partie (A).

3. Procédé selon la revendication 1, ou 2, dans lequel, en ce qui concerne l'étape f) de la revendication 1, la deuxième partie (B) utilise le paramètre obtenu de la transformation uniquement sur une des deux clés publiques de la première partie (A) et vérifie l'exactitude de la clé publique transformée obtenue en vérifiant une équivalence de la clé transformée avec l'autre clé publique de la première partie (A).

4. Document à puce RF avec un micro-ordinateur avec une mémoire de micro-ordinateur, de façon à ce que, dans la mémoire de micro-ordinateur, un premier programme informatique soit enregistré, qui est conçu de façon à ce que le procédé selon l'une des revendications 1 à 3 puisse être exécuté pour ce qui concerne la première partie (A).

5. Premier produit de programme d'ordinateur qui comprend un support lisible par un ordinateur, comprenant un code programme pour l'implémentation du premier programme informatique selon la revendication 4 dans la mémoire de micro-ordinateur.

6. Appareil de lecture à puce RF avec un ordinateur avec une mémoire d'ordinateur, tel que, dans la mémoire d'ordinateur, un deuxième programme informatique est enregistré, qui est conçu de façon à ce que le procédé selon l'une des revendications 1 à 3 puisse être exécuté pour ce qui concerne la deuxième partie (B).

7. Deuxième produit de programme d'ordinateur qui comprend un support lisible par un ordinateur, comprenant un code programme pour l'implémentation du deuxième programme informatique selon la revendication 6 dans la mémoire de l'ordinateur.
